# EUROPEAN PATENT SPECIFICATION

(11) **EP 0 917 923 B1**
(45) Date of publication and mention of the grant of the patent: **23.04.2003**
(21) Application number: 99101597.5
(22) Date of filing: 04.08.1995
(51) Int. Cl.: B23K 9/133

(54) **Wire feeder torch**
Schweissbrenner mit Drahtvorschub
Torche avec dispositif d'avance du fil

(30) Priority: 10.08.1994 IL 11061394
(43) Date of publication of application: 26.05.1999
(62) Divisional of application: 95112297.7
(73) Proprietor: PLANETICS WELDING SYSTEMS LTD., Holon 58816 (IL)
(72) Inventor: David, David Albert, Holon 58816 (IL)
(74) Representative: Modiano, Guido, Dr.-Ing.

(56) References cited:
- WO-A-91/14530
- DE-A- 3 127 591
- DE-A- 3 445 328
- DE-U- 9 313 786
- US-A- 3 811 611

## Description

### FIELD AND BACKGROUND OF THE INVENTION

The present invention is of a torch feeder including a handle for a MIG torch combined with a goose-neck MIG torch for both push-pulling and pulling applications in semi-automatic and robotic welding.

DE-A-34 45 328.8 describes a torch feeder including gas and water cooling, the latter being supplied via a water supply pipe and removed via a water removal pipe.

### SUMMARY OF THE INVENTION

The present invention provides for a torch wire feeder as defined in claim 1.

Most of the push-pulling torch feeders available on the market today are of pistol type design. This type of system causes fatigue to the welder and does not allow him to weld inside narrow spaces. The torch for push-pulling with goose-neck construction currently existing in the practice is designed for low welding current, without 360° positioning of the neck. Both existing systems are heavy in comparison with the normal MIG torch (MIG torch without wire feeder). All constructions existing at the moment do not have enough temperature capacity in the welding of aluminum with pure Argon gas. The big problem with the w\existing torch feeders is the non-ergonomic styling of the outside form of the handle caused by the large dimensions of the wire feeder component used in these feeders. All torch-type feeders currently existing in the practice, damage poor-quality wire then damages the contact tip and the spares for the torch.

The new invention is a goose-neck wire feeder torch with ergonomic form, with low weight, with quality wire feeding, without damage to wire, without excessive use of additional contact tips or spares, with high welding current and temperature resistance in pure Argon gas welding, with small dimensions compared with the regular MIG welding torch (MIG torch without wire feeder). For this purpose, the invention uses a planetary head with very small dimensions and a high feeding efficiency coefficient connected with an electrical motor with a hollow shaft. This motor is based in a special body with front and back holders. The back side of the motor is fixed to the back holder. The back holder also has holes for tubes, each hole having a tube for shielded gas and for cooling water. The same holder is fixed to the welding cable (water-or gas-cooled) and also is fixed to a gas tube for the shielded gas and water tubes for hot and cold water. The front holder has distributor holes for shielded gas, cooling water and a guide for wire received from the planetary head. On the front side of the front holder, is a format thread for transmitting the welding current and two cylindrical chambers for water distribution from the torch feeder to the neck. The neck may be water-cooled to 500 amperes welding current or gas-cooled to 400 amperes welding current. The neck is fixed to the front holder with a threaded nut in the thread of the front holder. This assembly allows for neck rotation of 360°. Between the front and the back holder is a connection tube assembly, two tubes for water cooling and one for shielded gas. These transmit the welding current between the welding conduit cable and the neck and also transmit water and gas from the conduit tubes to the neck. The welding wire is delivered from the wire guide tube in the conduit to the back holder and through the hole of the motor shaft and then through the planetary head receiving a linear motion for feeding the wire to the neck for welding. All the parts described above are contained in the body of the handle with ergonomic form and low weight. In addition, the body handle contains two potentiometer for speed and arc voltage control regulation and a switch for start-stop of the process.

This torch feeder has the following advantages:
* low weight
* small dimensions, even when compared with standard MIG torch
* 360° neck rotation
* ergonomic form
* very light welding operation, without fatiguing the operator
* possibility of welding in narrow spaces
* universality for water-and gas-cooled applications
* suitable for heavy-duty welding with pure Argon gas protection

### BRIEF DESCRIPTION OF THE DRAWINGS

The invention is herein described, by way of example only, with reference to the accompanying drawings, wherein:

The wire feeder torch is described in more detail in the figures as listed below:
FIG. 1 is a cross section of the wire feeder torch with water-cooled function;
FIG. 2 is a cross section of wire feeder torch with gas-cooled function;
FIG. 3 shows section AA of Figures 1 and 2;
FIG. 4 shows section BB of Figures 1 and 2;
FIG. 5 shows section CC of Figures 1 and 2;
FIG. 6 shows an ergonomic form from the bottom with 360° neck rotation;
FIG. 7 shows an ergonomic form from the side;
FIG. 8 shows an ergonomic form from the top;
FIG. 9 is cross section of front/back assembly for water-cooled;
FIG. 10 is a cross section of front/back assembly for gas-cooled;
FIG. 11 is view F of Figures 9 and 10;
FIG. 12 is a view A of Figures 9 and 10;
FIG. 13 is a back view of Figures 9 and 10.

### DESCRIPTION OF THE PREFERRED EMBODIMENTS

The embodiment of the torch feeder which is water and gas-cooled is not part of the claimed invention, but was retained for the better understanding, thereof.

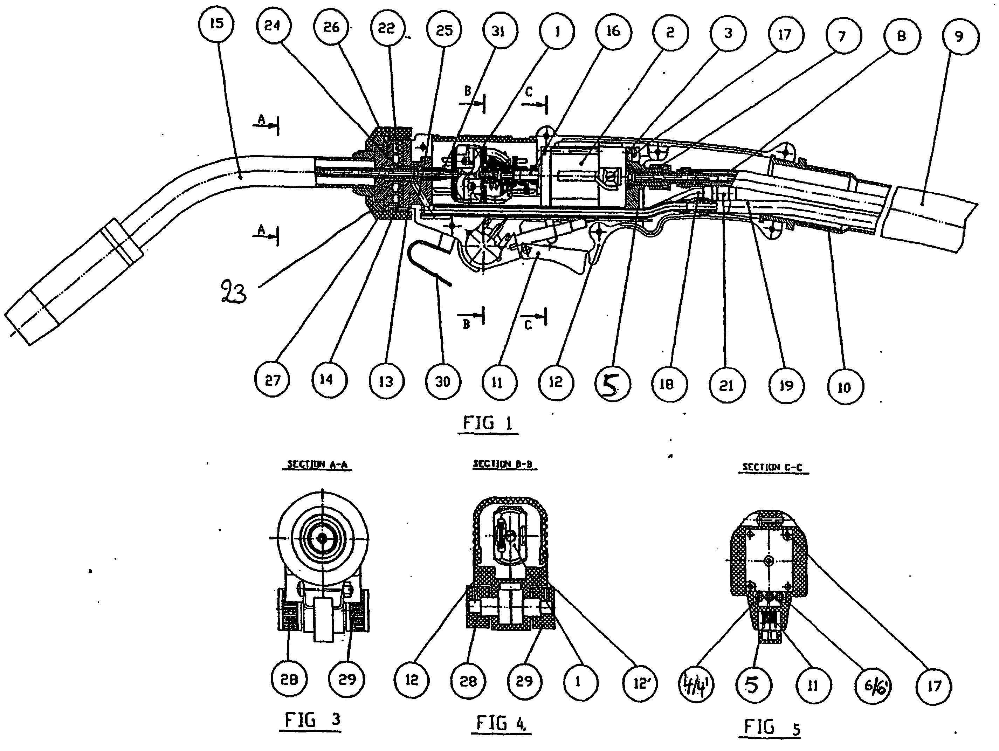

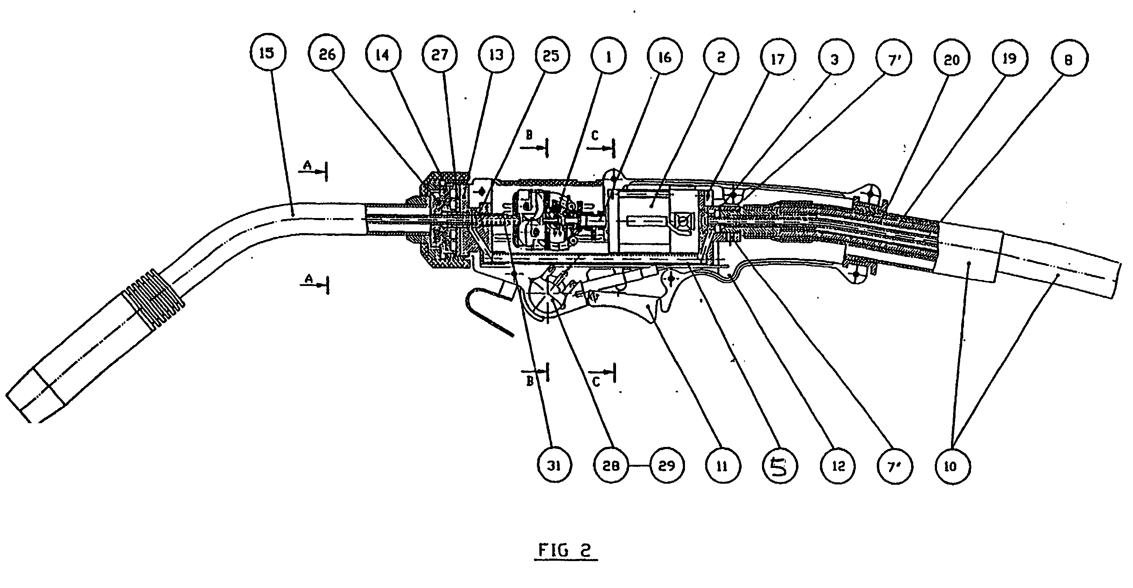

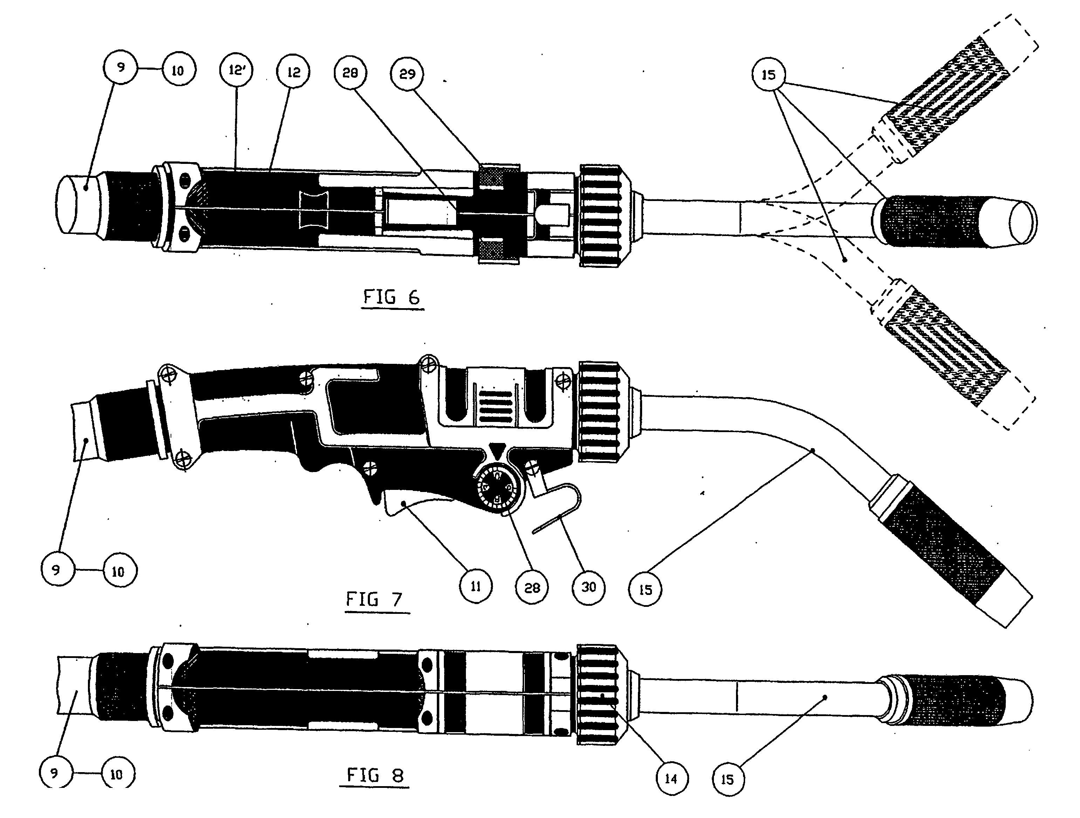

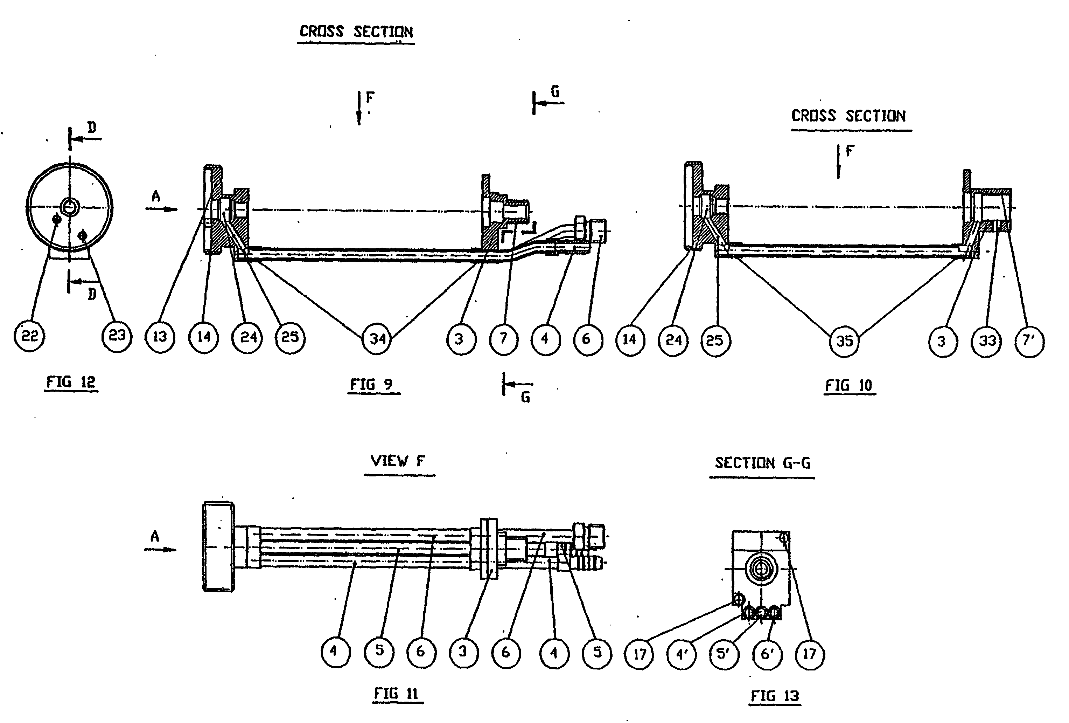

A more detailed explanation of the feeder torch, according to Figures 1-13 is as follows:

The planetary head-1 is connected to the motor-2 with hollow shaft-16. The motor-2 is based in the back holder-3 with screws-17. The back holder-3 has distributor holes-4,5,6 for transmission of water and gas. The wire guiding tube-8 with the conduit-9 is assembled to the back holder-3 with nut-7. The gas tube-19 from the conduit-9 is assembled with the gas tube-5 with a nut, and the water conduits 18 and 21 are assembled with the tubes 6 and 4 respectively. The front holder-13 is assembled with brazing with the tubes-4,5,6. This holder-13 has distributor hole-25 for gas and distributor holes-22,23 for water. The gas is connected to the neck-15 with diffuser-24. Also, the water is connected to the neck-15 with the distributor holes 22,23. The welding current is transmitted from the welding cable-21 to the front holder-13 and the neck-15 with tubes-4,5,6. The neck-15 is assembled with the front holder with thread and nut-14 for welding current transmission. Between the neck body-26 and the front holder-13 is sealing with rubber seal-27. The same seal-27 is for water-and gas-insulation. All of these parts are included in the handle-12 and 12' (12 is the right and 12' is the left part of the handle). In addition, in the handle-12 and 12' is mounted switch-11 and two potentiometers-28,29 for wire speed and arc voltage control. For fixing to the welding table, the handle has hook-30. The wire-32 from the conduit-9(10) is push-pulled with the planetary head-1 to the guide-31 and to the neck-15.

In the gas-cooled version of the torch feeder, the tubes-4,6 are prepared like rods 4',6' instead of increasing the cross section of the welding transmission body, and the nut-7 is male screw 7' with fixator-33.

While the invention has been described with respect to a limited number of embodiments, it will be appreciated that many variations, modifications and other applications of the invention may be made. Where technical features mentioned in any claim are followed by reference signs, those reference signs have been included for the sole purpose of increasing the intelligibility of the claims and accordingly, such reference signs do not have any limiting effect.

## Claims

1. A torch wire feeder for arc welding, said torch wire feeder comprising:
a front holder (13) and a back holder (3), said front holder (13) having a distributor hole (25) for gas-cooling;
an electrical motor (2) mounted to said back holder (3) and receiving wire from a conduit (8), said electrical motor (2) having a hollow shaft (16) for allowing the passage of said wire;
a planetary head (1) coupled to said electrical motor (2);
a tube (5) and a pair of rods (4', 6') coupled between said front holder (13) and said back holder (3), said back holder (3) connecting said tube (5) with a conduit (19) for gas, said tube (5) and said pair of rods (4', 6') being situated around said motor (2) and said planetary head (1), said tube (5) and said pair of rods (4', 6') embodying a conduit for welding current; and
a goose-neck (15) mounted to said front holder (13) and including a neck,
said goose-neck (15) being mounted to said front holder (13) through a thread nut (14), said thread nut (14) serving for transmitting the welding current received via said tube (5) and said rods (4', 6').

2. The torch wire feeder according to claim 1, **characterized in that** said goose-neck (15) is adapted for a 360 DEG rotation and **in that** said goose-neck is exchangeable for different types of operation.

3. The torch wire feeder according to claims 1 or 2, **characterized in that** said torch wire feeder comprises low weight handle (12) with an ergonomic form, said handle (12) containing two potentiometers (28, 29) for wire speed and arc voltage control regulation, a start-stop switch (11) and a hook (30).

4. The torch wire feeder according to one or more of the preceding claims, **characterized in that** said back holder (3) has a nut (7) for assembling said conduit (8) to said back holder (3).

5. The torch wire feeder according to one or more of the preceding claims, **characterized in that** said distributor hole (25) for gas-cooling is connected via a diffuser (24) to said goose-neck (15).

6. The torch wire feeder according to one or more of the preceding claims, **characterized in that** there is provided a rubber seal (27) for sealing between said goose-neck (15) and said front holder (13).

7. The torch wire feeder according to either of claims 5 and 6, **characterized in that** said diffuser is threaded to said front holder (13),said torch further comprising a guide (31) which is adaptable axially to said planetary head (1) for receiving wire from said planetary head (1) and for guiding the wire to said goose-neck (15), said guide (31) being displaceable and replaceable with additional guides having different diameters.

8. The torch wire feeder according to any of the preceding claims, **characterized in that** said goose-neck (15) is removable.

## Patentansprüche

1. Drahtvorschub für Schweißbrenner für das Bogenschweißen, wobei der Drahtvorschub für Schweißbrenner folgendes umfasst:
einen vorderen Halter (13) und einen hinteren Halter (3), wobei der vordere Halter (13) Verteilerlöcher (25) für Gaskühlung hat;
einen elektrischen Motor (2), der auf dem hinteren Halter (3) montiert ist und Draht von einer Leitung (8) erhält, wobei der elektrische Motor (2) eine hohle Welle (16) hat, um den Durchgang des Drahtes zu gestatten;
einen Planetenkopf (1), der an den elektrischen Motor (2) gekoppelt ist;
eine Röhre (5) und ein Paar von Stangen (4', 6'), die zwischen dem vorderen Halter (13) und dem hinteren Halter (3) gekoppelt sind, wobei der hintere Halter (3) die Röhre (5) mit einer Leitung (19) für Gas verbindet, wobei die Röhre (5) und das Paar von Stangen (4', 6') eine Leitung für Schweißstrom verkörpern; und
einen Gänsehals (15), der am vorderen Halter (13) montiert ist und einen Hals einschließt,
wobei der Gänsehals (15) am vorderen Halter (13) durch eine mit einem Gewinde versehene Mutter (14) montiert ist, wobei die mit dem Gewinde versehene Mutter (14) dazu dient, den über die Röhre (5) und den Stangen (4', 6') empfangenen Schweißstrom zu übertragen.

2. Der Drahtvorschub für Schweißbrenner gemäß Anspruch 1, **dadurch gekennzeichnet, dass** der Gänsehals (15) für eine 360 Grad Drehung ausgebildet ist, und dadurch, dass der Gänsehals für verschiedene Arten von Betrieben austauschbar ist.

3. Der Drahtvorschub für Schweißbrenner gemäß den Ansprüchen 1 oder 2, **dadurch gekennzeichnet, dass** die Drahtführung für den Schweißbrenner einen leichtgewichtigen Griff (12) mit einer ergonomischen Form umfasst, wobei der Griff (12) zwei Potentiometer (28, 29) für die Regelung der Drahtgeschwindigkeit und der Bogenspannungsteuerung, einen Start-Stop-Schalter (11) und einen Haken (30) einschließt.

4. Der Drahtvorschub für Schweißbrenner gemäß einem oder mehreren der vorhergehenden Ansprüche, **dadurch gekennzeichnet, dass** der hintere Halter (3) eine Mutter (7) hat, um die Leitung (8) mit dem hinteren Halter (3) zusammenzubauen.

5. Der Drahtvorschub für Schweißbrenner gemäß einem oder mehreren der vorhergehenden Ansprüche, **dadurch gekennzeichnet, dass** das Verteilerloch (25) für Gaskühlung über einen Verteiler (24) mit dem Gänsehals (15) verbunden ist.

6. Der Drahtvorschub für Schweißbrenner gemäß einem oder mehreren der vorhergehenden Ansprüche, **dadurch gekennzeichnet, dass** eine Gummidichtung (27) zur Abdichtung zwischen dem Gänsehals (15) und dem vorderen Halter (13) bereitgestellt ist.

7. Der Drahtvorschub für Schweißbrenner gemäß einem der Ansprüche 5 und 6, **dadurch gekennzeichnet, dass** der Verteiler an dem vorderen Halter (13) angeschraubt ist, wobei der Brenner weiterhin eine Führung (31) umfasst, die axial zum Planetenkopf (1) anpassbar ist, um Draht vom Planetenkopf (1) zu empfangen und um den Draht zum Gänsehals (15) zu führen, wobei die Führung (31) verschiebbar und mit verschiedenen zusätzlichen Führungen mit unterschiedlichen Durchmessern ersetzbar ist.

8. Der Drahtvorschub für Schweißbrenner gemäß irgendeinem der vorhergehenden Ansprüche, **dadurch gekennzeichnet, dass** der Gänsehals (15) abnehmbar ist.

## Revendications

1. Un alimentateur en fil pour torche, pour le soudage à l'arc, ledit alimentateur en fil pour torche, comprenant :
un support avant (13) et un support arrière (3), ledit support avant (13) ayant un trou de distribution (25) pour le refroidissement au gaz;
un moteur électrique (2), monté dans ledit support arrière (3) et recevant du fil venant d'un conduit (8), ledit moteur électrique (2) ayant un arbre (16) creux pour permettre le passage dudit fil;
une tête planétaire (1) couplée audit moteur électrique (2);
un tube (5) et une paire de tiges (4', 6'), couplée entre ledit support avant (16) et ledit support arrière (3), ledit support arrière (3) connectant ledit tube (5) à un conduit (19) prévu pour le gaz, ledit tube (5) et ladite paire de tiges (4', 6') étant placés autour dudit moteur (2) et de ladite tête planétaire (1), ledit tube (5) et ladite paire de tiges (4', 6') formant un conducteur pour le courant de soudure; et
un élément en col de cygne (15), monté sur ledit support avant (13) et comprenant un goulot ou rétrécissement,
ledit élément en col de cygne (15) étant monté sur ledit support (13) par un écrou taraudé (14), ledit écrou taraudé (14) servant à transmettre le courant de soudage reçu via ledit tube (5) et lesdites tiges (4', 6').

2. L'alimentateur en fil pour torche selon la revendication 1, **caractérisé en ce que** ledit élément en col de cygne (15) est adapté pour effectuer une rotation à 360 degrés, et **en ce que** ledit élément en col de cygne est interchangeable pour différents types de fonctionnement.

3. L'alimentateur en fil pour torche selon la revendication 1 ou 2, **caractérisé en ce que** ledit alimentateur en fil pour torche comprend une poignée (12) de faible poids, de forme ergonomique, ladite poignée (12) contenant deux potentiomètres (28, 29) pour le réglage de la vitesse du fil et la commande de la tension d'arc, un interrupteur marche/arrêt (11) et un crochet (30).

4. L'alimentateur en fil pour torche selon l'une ou plusieurs des revendications précédentes, **caractérisé en ce que** ledit support arrière (3) comporte un écrou (7) pour assembler ledit conduit (8) audit support arrière (3).

5. L'alimentateur en fil pour torche selon l'une ou plusieurs des revendications précédentes, **caractérisé en ce que** ledit trou de distributeur (25) pour le refroidissement au gaz est relié, via un diffuseur (24), audit élément en col de cygne (15).

6. L'alimentateur en fil pour torche selon l'une ou plusieurs des revendications précédentes, **caractérisé en ce qu'**est prévu un joint d'étanchéité (27) en caoutchouc, pour assurer une isolation hermétique entre ledit élément en col de cygne (15) et ledit support avant (13).

7. L'alimentateur en fil pour torche selon l'une des revendications 5 et 6, **caractérisé en ce que** ledit diffuseur est monté par vissage sur le support avant (13), ladite torche comprend en outre un guidage (31), adaptable axialement à ladite tête planétaire (1) pour recevoir un fil venant de ladite tête planétaire (1) et guider le fil vers ledit élément en col de cygne (15), ledit guidage (31) étant déplaçable et remplaçable par des guidages additionnels de diamètres différents.

8. L'alimentateur en fil pour torche selon l'une quelconque des revendications précédentes, **caractérisé en ce que** ledit élément en col de cygne (15) est amovible.
